# EUROPÄISCHE PATENTSCHRIFT

(11) **EP 1 977 649 B1**
(45) Veröffentlichungstag und Bekanntmachung des Hinweises auf die Patenterteilung: **01.05.2013**
(21) Anmeldenummer: 08006691.3
(22) Anmeldetag: 01.04.2008
(51) Int. Cl.: A22C 11/02, A22C 17/10, B41J 3/407, B65B 57/04, B65B 9/213, B65B 61/02, B41J 3/50, B65B 9/20

(54) **Unsichtbare Druckmarkierung**
Invisible printed mark
Marquage d'impression invisible

(30) Priorität: 03.04.2007 DE 202007004908 U
(43) Veröffentlichungstag der Anmeldung: 08.10.2008
(73) Patentinhaber: Poly-clip System GmbH & Co. KG, 65795 Hattersheim (DE)
(72) Erfinder: Töpfer, Klaus, 64572 Büttelborn (DE)
(74) Vertreter: Eisenführ, Speiser & Partner

(56) Entgegenhaltungen:
- EP-A- 1 428 437
- EP-A- 1 611 792
- WO-A-97/24278
- WO-A-2005/110098
- US-A- 5 516 362

## Beschreibung

Die Erfindung betrifft eine Vorrichtung zum Herstellen von mit flüssigem, viskosem oder granularem Füllgut befüllbaren Folienschlauch aus einem Folienband gemäß dem Oberbegriff des Anspruchs 1.

Insbesondere betrifft die Erfindung eine Vorrichtung zum Herstellen von mit flüssigem, viskosem oder granularem Füllgut befüllbaren Folienschlauch aus einem Folienband, wobei die Vorrichtung enthält: Ein an eine Füllmaschine für das Füllgut anschließbares Füllrohr, eine das Füllrohr umgebende Umformeinrichtung zum Umformen des Folienbandes zu einem Folienschlauch, eine in Füllausstoßrichtung hinter der Umformeinrichtung angeordnete Siegeleinrichtung zum Versiegeln von nach der Umformung benachbarten Längskanten des Folienbandes, um einen Folienschlauch zu bilden, einen Vorschubantrieb für den Folienschlauch, eine in Füllausstoßrichtung vor der Umformeinrichtung angeordnete Schreibeinrichtung zum Aufbringen von Druckmarkierungen auf dem Folienband, eine in Füllausstoßrichtung nach der Umformeinrichtung angeordnete, erste Leseeinrichtung und eine in Füllausstoßrichtung vor der Umformeinrichtung angeordnete zweite Leseeinrichtung, wobei beide Leseeinrichtungen zum Lesen von auf dem Folienband angebrachten Druckmarkierungen vorgesehen sind.

Es ist bekannt, die für die Produktion von Würsten oder ähnlichen Portionspackungen benötigte Schlauchhülle an Ort und Stelle durch Längsnahtversiegeln eines in Schlauchform umgeformten Folienbandes kontinuierlich oder intermittierend mittels einer solchen Vorrichtung herzustellen (vgl. zum Beispiel das Dokument EP 1 611 792). Unter Siegeln ist hierbei jede Art des (unlösbaren) Verbindens der beiden Längskanten zu verstehen, worunter beispielsweise das Schweißen als bevorzugtes Siegelverfahren, aber auch das Kleben oder dgl. fällt. Bei der aus der europäischen Anmeldung 0 908 103 bekannten, gattungsbildenden Vorrichtung wird das Folienband von dem im Bereich oder in Transport- bzw. Füllstoßausrichtung hinter der Siegeleinrichtung angeordneten Vorschubantrieb über eine entsprechenden Umformeinrichtung (Formschulter) und durch die Siegel- oder Schweißeinrichtung gezogen. Die Formschulter umgibt das Füllrohr und formt das Folienband um das Füllrohr herum der Gestalt um, dass dessen Längskanten entweder auf Stoß oder überlappend aneinander angrenzen. Diese Längskanten werden in der sich anschließenden Schweiß- bzw. Siegelvorrichtung direkt oder mittels eines die Kanten verbindenden Siegelbandes miteinander verbunden.

Der auf diese Weise gebildete Folienschlauch wird von den Vorschubantrieben weiter in Füllausstoßrichtung in einen Pufferabschnitt auf dem Füllrohr gefördert, in der er sich ziehharmonikaartig zu einem Vorrat faltet. Ein Vorrat ist notwendig, da der Abfüllvorgang des Füllgutes in den Folienschlauch intermittierend und der Siegelvorgang in den meisten Fällen kontinuierlich, in einigen Fällen auch intermittierend, jedenfalls aber langsamer als das durch den Füllausstoß während des Abfüllvorgangs bedingte Abziehen des Folienschlauches von dem Füllrohr erfolgt. Andererseits entstehen nach dem Abfüllen während des Verschließens der Enden des befüllten Folienschlauches mittels einer sog. Clipmaschine Pausen. Daher wird der Folienschlauch auch während der Clippausen (Füllerstillstand), in denen der Abfüllvorgang angehalten ist, weiterproduziert. Der Folienschlauchvorrat staut sich dabei vor einem Rückhaltemittel an.

Um eine Synchronisation zwischen der Folienschlauchherstellung und dem Abfüllvorgang zu erzielen, wird die Folienschlauchherstellung bekanntermaßen geregelt. Dazu kommt eine Messeinrichtung zum Bestimmen einer Vorratsmenge des Folienschlauchs zum Einsatz, die typischerweise aus einem gegenüber dem Füllrohr beweglichen und einem ortsfesten Sensorelement besteht. Das bewegliche Sensorelement ist mit einem in den Querschnitt des gefalteten oder gerafften Folienschlauches eingreifenden Mitnehmer verbunden, der zugleich das Rückhaltemittel für den Folienschlauchvorrat bildet. Wird der Vorrat vergrößert, so verschiebt dieser den Mitnehmer und das bewegliche Sensorelement in Förderrichtung der Vorschubantriebe gegen eine Rückstellkraft, die beispielsweise von einer Feder (Federkraft) oder einem pneumatischen Element (Druckkraft) aufgebracht wird. Wird Folienschlauch von dem Vorrat abgezogen und dieser somit verkleinert, dann treibt die Rückstellkraft den Mitnehmer mit dem beweglichen Sensorelement gegen die Förderrichtung zurück.

In der einfachsten Ausgestaltung der Messeinrichtung weist das feste Sensorelement beispielsweise zwei beabstandete mechanische oder magnetische Schalter oder Signalgeber auf, die jeweils bei Annäherung des beweglichen Sensorelements (mechanische oder berührungslose Kontaktfläche) betätigt werden. Die Schalter lösen dabei ein Ab- bzw. Einschalten der Vorrichtung bei einer durch eine entsprechende Relativanordnung der Schalter/Signalgeber und Kontaktflächen ausgewählten, voreingestellten maximalen bzw. minimalen Vorratsmenge aus.

Eine weiterentwickelte Messeinrichtung sieht eine Wegmessung zwischen dem beweglichen und dem ortsfesten Sensorelement vor, deren Resultat eine differenziertere Anpassung der Siegel- und Fördergeschwindigkeit an die Vorratsmenge erlaubt.

In jedem Fall aber wird das bewegliche Sensorelement durch den in den Querschnitt des gerafften Folienschlauches eingreifenden Mitnehmer transportiert. Dies setzt jeweils eine ausreichende Faltung des Vorrats voraus, an der der Mitnehmer angreift. Nun gibt es jedoch Folien mit Beschichtungen, welche durch starke Faltungen Schaden nehmen. Beispielweise sind Folien mit einer Aluminiumbeschichtung empfindlich gegen scharfe Knicke, da die relativ spröde Aluminiumschicht an solchen Stellen reißen kann, wodurch sowohl die funktionalen als auch die ästhetischen Eigenschaften der Folie beeinträchtigt werden. Dasselbe gilt für steife Folienmaterialien, die nach scharfen Umformungen nicht mehr vollständig geglättet werden können und somit eine irreversible, unerwünscht wellige Struktur beibehalten. Ferner tritt das Problem auf, dass die Falten der nach dem Versiegeln noch heißen Folie bei zu großem Staudruck während der Vorratsbildung aneinander klebt.

Eine weiter Möglichkeit der Bestimmung und Steuerung des Folienschlauchvorrats ist das Aufbringen von Markierungen auf das Folienband oder auf den Folienschlauch. Dabei bringt eine Schreibeinrichtung, wie z.B. ein Drucker, in vorher festgelegten Abständen eine entsprechende Markierung beispielsweise auf das Folienband auf. Eine Leseeinrichtung erfasst diese Markierungen und bestimmt so die Länge des von dem Vorrat an Folienband abgezogenen Folienbandes. In der Siegeleinrichtung wird das Folienband zum Folienschlauch verarbeitet und bildet wie oben beschrieben den Folienschlauchvorrat. Eine weitere Leseeinrichtung, die in der Nähe des in Füllausstoßrichtung vorderen Endes des Füllrohrs angeordnet ist, erfasst die Länge des vom Folienschlauchvorrat abgezogenen Folienschlauchs. Aus der Differenz der Länge des von Vorrat an Folienband abgezogenen Folienbandes und des vom Folienschlauchvorrat abgezogenen Folienschlauchs wird die aktuelle Länge des Folienschlauchvorrats bestimmt. Weiterhin kann anhand der jeweils aktuellen Länge des Folienschlauchvorrats die Geschwindigkeit der Herstellung des Folienschlauchs so beeinflusst werden, dass der Folienschlauchvorrat in einem vorbestimmten Bereich annähernd konstant bleibt.

Solche Markierungen können aber den optischen Eindruck des fertigen Produkts beeinträchtigen. Je nach Größe, Form und Farbe der Markierungen verdecken sie beispielsweise die üblicherweise schon bei der Herstellung des Folienbandes auf diesem aufgebrachten Beschriftungen und Bilder. Eine Steuerung des Aufdrucks in der Weise, dass die Bedruckung des vorhandene Folienbandes nicht beeinträchtigt wird, ist entweder sehr aufwendig oder je nach Größe der Bedruckung unmöglich.

Aufgabe der vorliegenden Erfindung ist es, eine Vorrichtung und ein Folienband zum Herstellen von Folienschlauch aus diesem Folienband zu schaffen, die diese Nachteile überwinden. Es ist weiterhin Aufgabe der Erfindung, das Aufbringen von Druckmarkierungen an beliebigen Stellen des Folienbandes zu ermöglichen.

Die vorstehende Aufgabe wird hinsichtlich der Vorrichtung durch die Merkmale des Anspruchs 1 gelöst. In den sich daran anschließenden Ansprüchen 2 bis 5 finden sich vorteilhafte Ausgestaltungen hierzu.

Insbesondere wird die vorstehende Aufgabe durch eine Vorrichtung der eingangs genannten Art gelöst, bei der eine Schreibeinrichtung in der Lage ist, wenigstens eine Druckmarkierung auf dem Folienband anzubringen, deren elektromagnetisches Spektrum außerhalb des sichtbaren Lichts liegt, und bei der die erste und zweite Leseeinrichtung in der Lage sind, diese Druckmarkierung zu lesen. Solche Druckmarkierungen können an jeder beliebigen Stelle des Folienbandes oder des Folienschlauchs angebracht werden, da sie für den Verbraucher nicht sichtbar sind und so das Erscheinungsbild des fertigen Produkts nicht beeinträchtigen.

In einfachsten Fall sind diese Markierungen unter UV-Licht sichtbar, da für solche Anwendungen ausgereifte Technik zur Verfügung steht. Generell sollte das elektromagnetische Spektrum der Druckmarkierungen aber in einem Wellenlängenbereich liegen, der kleiner als 380 nm und größer als 780 nm ist. Durch dieses breite Spektrum wird beispielsweise auch die Anwendung von Infrarot-Strahlung möglich. Weiter bevorzugt ist ein Bereich der kleiner als 350 nm und größer als 800 nm ist, wodurch sichergestellt werden kann, dass die Markierungen tatsächlich nur mit technischen Hilfsmitteln sichtbar werden.

Die Verteilung der Druckmarkierungen auf dem Folienband kann beliebig erfolgen. In einer bevorzugten Ausführung ist die Verteilung gleichmäßig. Damit kann einer bestimmten Anzahl an Markierungen immer eine bestimmte Länge an Folienband zugeordnet werden.

Die Verteilung der Druckmarkierungen auf dem Folienband kann auch ungleichmäßig erfolgen. Eine solche Verteilung kann vorteilhaft sein, wenn z.B. bei Verwendung des gleichen Folienbandes, also bei Beibehaltung des Durchmessers, die Länge des Produktes geändert werden soll.

Üblicherweise werden Wurstprodukte mit produkt- oder herstellerspezifischen Daten versehen, beispielsweise mittels Aufklebern, die nach der Fertigstellung auf das Produkt appliziert werden. Werden solche Daten oder auch Bilder bereits bei der Herstellung des Folienbandes auf diesem angeordnet, kann dieser Arbeitsschritt bei der vor der Herstellung des Folienschlauches oder nach Fertigstellung des Wurstprodukts entfallen.

In einer vorteilhaften Ausführung des Folienbandes sind die durch die Schreibeinrichtung auf dem Folienband angebrachten Druckmarkierungen unabhängig von der Position der produkt- oder herstellerspezifischen Kennzeichen angebracht. Dadurch entfallen Vorrichtungen und Arbeitsschritte zur Koordinierung der Druckmarken und der produkt- oder herstellerspezifischen Kennzeichen.

Weitere Aufgaben, Merkmale und Vorteile der vorliegenden Erfindung werden nun anhand der im Folgenden beschriebenen Ausführungsbeispielen unter Bezugnahme auf die zugehörigen Figuren beschrieben. Es zeigen:
- Fig. 1: eine schematische Darstellung eines Ausführungsbeispiel der erfindungsgemäßen Vorrichtung zum Herstellen von Folienschlauch in der Seitenansicht; und
- Fig. 2: das Ausführungsbeispiel gemäß Fig. 1 in der Draufsicht.

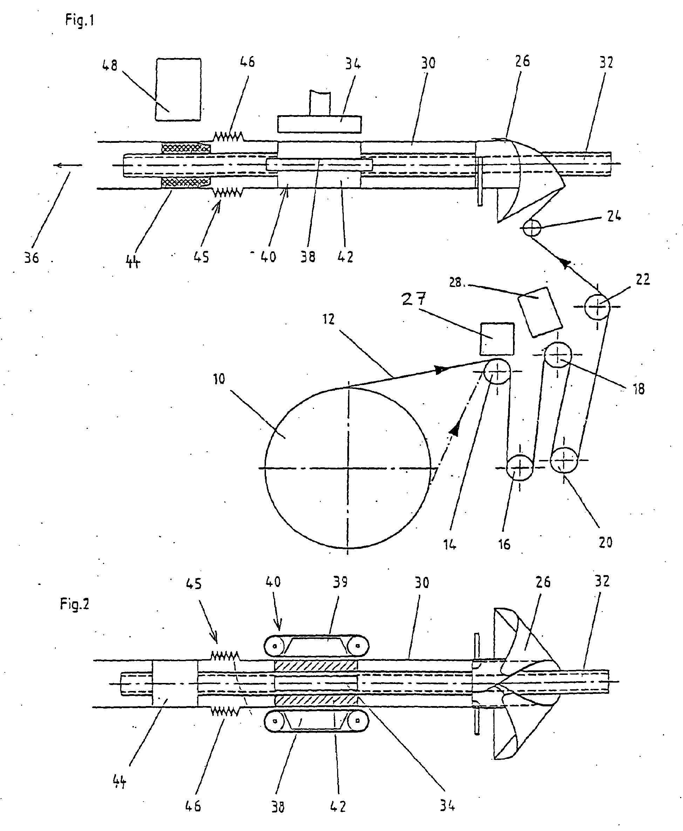

Die Vorrichtung gemäß Fig. 1 weist eine Vorratsrolle 10 eines zur Verarbeitung anstehenden Folienbandes 12 auf. Das Folienband 12 wird über mehrere Umlenkrollen 14, 16, 18, 20, 22 und 24 an eine Formschulter 26 herangeführt. Im Bereich der Umlenkrolle 14 befindet sich eine Schreibeinrichtung 27. Im Bereich der Umlenkrolle 18 ist eine erste Leseeinrichtung 28 einer Messeinrichtung auf der der Umlenkrolle 18 gegenüberliegenden Oberfläche des Folienbandes 12 angeordnet.

Das Folienband 12 wird in der Formschulter 26 zu einem Folienschlauch 30 um ein Füllrohr 32 herum umgeformt. Dabei umgibt der Folienschlauch 30 das Füllrohr 32 im Wesentlichen koaxial. Der Folienschlauch 30 weist nach der Umformung zwei, gemäß der Ansicht in Fig. 1 oben liegende, jedoch nicht dargestellte, benachbarte Längskanten auf, die in einer der Formschulter 26 in Füllausstoßrichtung (vgl. Pfeil 36) stromabwärts angeordneten Siegelstation 34 versiegelt bzw. verschweißt werden. In gleicher Höhe mit der Siegelstation 34 befindet sich beiderseits des Füllrohres 32 jeweils ein auf der Außenseite des Folienschlauchs 30 anliegender Antriebsriemen 38, 39 eines Vorschubantriebs 40, der das Folienband 12 nach- und unter der Siegelstation 34 hindurchzieht und gleichzeitig den fertigen Folienschlauch 30 in Füllausstoßrichtung 36 schiebt. Im Bereich der Siegelstation 34 und des Vorschubantriebs 40 ist koaxial auf dem Füllrohr 32 ein Ring 42 angeordnet, dessen Außendurchmesser in etwa dem Durchmesser des fertigen Folienschlauchs 30 entspricht. Unter Andruck gegen diesen Ring 42 wirken sowohl die Antriebsriemen 38, 39 als auch Siegelstation 34 (genauer ein Siegelbalken, Siegelband oder Heißluftstrom der Siegelstation).

Stromabwärts der Siegelstation 34 befindet sich koaxial auf dem Füllrohr 32 ein Rückhaltering 44. Da der Vorschubantrieb 40 in Vorschubrichtung vor dem Rückhaltering 44 wirkt und der Folienschlauch 30 keine ausreichende Eigenstabilität aufweist, bildet sich ein ziehharmonikaartig gefalteter Folienschlauchvorrat 46 auf einer Pufferstrecke 45 zwischen dem Rückhaltering 44 und dem Vorschubantrieb 40. Weil es bei der erfindungsgemäßen Vorrichtung jedoch nicht auf die Stärke der Faltung ankommt, kann diese beispielsweise unter Berücksichtigung der Empfindlichkeit des Folienmaterials durch eine entsprechende Wahl der Länge der Pufferstrecke 45 bei gleicher Vorratskapazität oder bei vorgegebener Länge der Pufferstrecke 45 durch eine Reduzierung der Vorratsmenge verringert werden.

Der Folienschlauch 30 wird dann beim Abfüllvorgang in Füllausstoßrichtung 36 über den Rückhaltering von dem Puffervorrat abgezogen. In Höhe des Rückhalterings 44 oder in Füllausstoßrichtung 36 dahinter, d.h. an der Stelle, an der die Folie durch das Abziehen von dem Vorrat 46 wieder gestreckt ist, befindet sich eine zweite Leseeinrichtung 48 der Messeinrichtung.

Wie weiterhin aus Fig.1 zu erkennen ist, befindet sich in Füllausstoßrichtung 36 unmittelbar hinter der Vorratsrolle 10 die Schreibeinrichtung 27 zum Aufbringen von Druckmarkierungen auf das Folienband 12. Die erste Leseeinrichtung 28 registriert die von der Schreibeinrichtung 27 auf das Folienband 12 aufgebrachten Markierungen und bestimmt daraus, bei bekanntem Abstand der Markierungen, die Länge des von der Vorratsrolle 10 abgezogenen Folienbandes 12.

Da das Folienband 12 bis zur Siegelstation 34 in seiner Längsausdehnung weder gestaucht noch gestreckt wird, entspricht die Länge des von der Vorratsrolle 10 abgezogenen Folienbandes 12 exakt der Länge des vom der Siegelstation 34 an die Pufferstrecke 45 abgegebenen Folienschlauchs 30.

Wie bereits oben beschrieben, wird der Folienschlauch 30 beim Abfüllvorgang in Füllausstoßrichtung 36 über den Rückhaltering 44 von dem gefalteten Puffervorrat abgezogen. Dabei wird der gefaltete Folienschlauch 30 wieder gestreckt. Die unmittelbar an dem Rückhaltering 44 angebrachte zweite Leseeinrichtung 48 bestimmt anhand der von der Schreibeinrichtung 27 auf dem Folienband 12 angebrachten Druckmarkierungen die von der Pufferstrecke 45 abgezogene Länge an Folienschlauch 30.

Aus der Differenz der, wie zuvor beschrieben, ermittelten Längen von der Pufferstrecke 45 zugeführtem und von ihr abgezogenen Folienschlauch 30, ist es möglich, die Länge des Folienschlauchvorrats 46 jeder Zeit exakt zu bestimmen und durch eine entsprechende Steuerung des Vorschubantriebs 40 gezielt zu beeinflussen.

Es ist zu erkennen, dass beim Aufbringen von Druckmarkierungen, deren elektromagnetisches Spektrum außerhalb des sichtbaren Lichts liegt, auf das Folienband 12 die darauf bereits befindlichen produkt- oder herstellerspezifischen Kennzeichen nicht beeinträchtigt werden. Deshalb können die Druckmarkierungen an jeder Stelle des Folienbandes 12 aufgebracht werden, entsprechend der Eignung zur oben beschriebenen Regelung der Länge des Folienschlauchvorrats 46.

Nachfolgend wird das Herstellungsverfahren von mit flüssigem, viskosem oder granularem Füllgut befüllbarem Folienschlauch 30 aus einem Folienband 12 mittels der erfindungsgemäßen Vorrichtung beschrieben. In einem ersten Schritt wird das Folienband 12 von dem Folienbandvorrat 10 der Umformeinrichtung 26 zugeführt. Unmittelbar hinter dem Folienbandvorrat 10 bringt die Schreibeinheit 27 fortlaufend Druckmarkierungen in vorher festgelegten Abständen auf dem Folienband 12 an. Die Leseeinrichtung 28 registriert anhand der Markierungen die abgezogene Länge des Folienbandes 12. Das Folienband 12 wird in der Umformeinrichtung 26 zu einem Folienschlauch 30 um ein Füllrohr 32 herum umgeformt und danach in einer Schweiß- oder Siegeleinrichtung 34 der nach der Umformung überlappenden oder nebeneinanderliegenden Längskanten mit oder ohne Verwendung eines zusätzlichen Siegelstreifens zu dem geschlossenen Folienschlauch 30 verschweißt oder versiegelt. Der versiegelte Folienschlauch 30 wird danach mittels des Vorschubantriebs 40 von der Siegeleinrichtung 34 an den Folienschlauchvorrat 46 auf dem Füllrohr 32 abgegeben, von dem er, durch den Füllvorgang bedingt, bei Bedarf wieder abgezogen wird. Dabei wird die Länge des von dem Folienschlauchvorrat 46 abgezogenen Folienschlauchs 30 von der zweiten Leseeinrichtung 48 erfasst und ebenso wie die von der ersten Leseeinrichtung 28 erfassten Länge des von dem Folienbandvorrat 10 abgezogenen Folienbandes 12 einer (elektronischen) Regelung zugeführt wird, die den Siegelvorgang bzw. die Siegelgeschwindigkeit so regelt, dass eine vorbestimmte, möglichst gleichbleibende Vorratsmenge an Folienschlauch 30 auf der Pufferstrecke 45 bereitgehalten wird.

Bei Betriebsbeginn oder Folienbandwechsel muss zunächst eine bestimmte Menge Folienschlauch 30 vorgesiegelt werden, damit ein einwandfreier Anlauf der Gesamtanlage (Siegelvorrichtung und Clipmaschine) gewährleistet ist. Diese bestimmte Menge kann dann durch die erfindungsgemäße Messung und Regelung der Siegelgeschwindigkeit beibehalten werden.

In dem in Fig.1 dargestellten Ausführungsbeispiel ist die Schreibeinrichtung 27 Teil der erfindungsgemäßen Vorrichtung. Selbstverständlich kann eine erfindungsgemäße Druckmarkierung bereits während der Herstellung des Folienbandes 12 auf dieses aufgebracht werden. Das Vorsehen einer Schreibeinrichtung wäre dann nicht mehr nötig.

Die erfindungsgemäßen Druckmarkierungen sind für das menschliche Auge nur mit Hilfsmitteln sichtbar und beinträchtigen das Erscheinungsbild des fertigen Produkts für den Verbraucher nicht. Deshalb können sie außer der Bestimmung der Länge des Folienschlauchvorrat 46 auf der Pufferstrecke 45 auch andere Funktionen erfüllen. Sie können weitere Informationen enthalten, die beispielsweise zu Kontrollzwecken genutzt werden können.

Weiterhin kann durch den Einsatz der erfindungsgemäßen Druckmarkierungen beispielsweise ein mittiges Druckbild der produkt- oder herstellerspezifischen Kennzeichen erzeugt werden, ohne dass auf die Lage der Druckmarkierungen geachtet werden muss.

Selbstverständlich kann auch eine Schreibeinheit vorgesehen werden, die "normale", also für das menschliche Auge sichtbare, Druckmarkierungen auf das Folienband 12 aufbringt. In diesem Fall müssen natürlich auch die Leseeinrichtungen 28, 48 in der Lage sein diese Markierungen zu erkennen.

Die Schreibeinrichtung 27 kann auch an jeder anderen Stelle zwischen dem Folienbandvorrat 10 und der Siegeleinrichtung 34 angebracht sein. Dann ist aber darauf zu achten, dass auch die Leseeinheit 28 an einer entsprechend geänderten Position vorgesehen sein muss.

## Patentansprüche

1. Vorrichtung zum Herstellen von mit flüssigem, viskosem oder granularem Füllgut befüllbaren Folienschlauch (30) aus einem Folienband (12), enthaltend ein an eine Füllmaschine für das Füllgut anschließbares Füllrohr (32), eine das Füllrohr (32) umgebende Umformeinrichtung (26) zum Umformen des von einer Vorratsrolle (10) über mehrere Umlenkrollen (14, 16, 18, 20, 22, 24) abgezogenen Folienbandes (12) zu einem Folienschlauch (30), der auf dem Füllrohr (32) in einem Folienschlauchvorrat (46) zwischenspeicherbar ist, eine in Füllausstoßrichtung (36) hinter der Umformeinrichtung (26) angeordnete Siegeleinrichtung (34) zum Versiegeln von nach der Umformung benachbarten Längskanten des Folienbandes (12), um einen Folienschlauch (30) zu bilden, einen Vorschubantrieb (40) für den Folienschlauch (30), eine in Füllausstoßrichtung (36) nach der Umformeinrichtung (26) angeordnete, erste Leseeinrichtung (48), eine in Füllausstoßrichtung (36) vor der Umformeinrichtung (26) angeordnete, zweite Leseeinrichtung (28) zum Lesen von auf dem Folienband (12) angebrachten Druckmarkierungen und eine in Abzugsrichtung des Folienbandes (12) vor der zweiten Leseeinrichtung (28) angeordnete Schreibeinrichtung zum Aufbringen von Druckmarkierungen auf dem Folienband (12),
**dadurch gekennzeichnet, dass** die Schreibeinrichtung (27) an einer Umlenkrolle (14, 16, 18, 20, 22, 24) angeordnet und in der Lage ist, auf dem Folienband (12) Druckmarkierungen aufzubringen, deren elektromagnetisches Spektrum außerhalb des sichtbaren Lichts liegt, dass die erste sowie die zweite Leseeinrichtung (48, 28) in der Lage sind, diese Druckmarkierungen zur Steuerung der Vorratsmenge des Folienschlauchvorrats (46) zu erfassen, und dass ein mittiges Druckbild der produkt- und/oder herstellerspezifischen Kennzeichen erzeugbar ist, ohne dass auf die Lage der Druckmarkierungen geachtet werden muss.

2. Vorrichtung nach Anspruch 1,
**dadurch gekennzeichnet, dass** das elektromagnetische Spektrum der Druckmarkierungen in einem Wellenlängenbereich einer Wellenlänge kleiner als 380 nm und größer als 780 nm liegt.

3. Vorrichtung nach Anspruch 2,
**dadurch gekennzeichnet, dass** das elektromagnetische Spektrum der Druckmarkierungen in einem Wellenlängenbereich einer Wellenlänge kleiner als 350 nm und größer als 800 nm liegt.

4. Vorrichtung nach den Ansprüchen 1 bis 3,
**dadurch gekennzeichnet, dass** ein beliebiges gewünschtes Druckbild der produkt- und/oder herstellerspezifischen Kennzeichen erzeugbar ist.

5. Vorrichtung nach einem der Ansprüche 1 bis 4,
**dadurch gekennzeichnet, dass** die Druckmarkierungen im Bereich von bereits auf dem Folienband (12) befindlichen produkt- oder herstellerspezifischen Kennzeichen angeordnet werden.

## Claims

1. An apparatus for producing a tubular film (30) which is made from a film strip (12) and which can be filled with liquid, viscous or granular filling material, said apparatus including a filling tube (32) which can be connected to a filling machine for the filling material, a forming device (26) which surrounds the filling tube (32) and is suitable for forming the film strip (12), which is drawn from a supply reel (10) over a plurality of deflection rollers (14, 16, 18, 20, 22, 24), into a tubular film (30) which can be temporarily stored in a supply of tubular film (46) on the filling tube (32), a sealing device (34) arranged downstream from the forming device (26) in the direction of discharge (36) from the filling tube, for sealing longitudinal edges of the film strip (12) that are adjacent each other after forming of the film strip (12) to make a tubular film (30), a feed drive (40) for the tubular film (30), a first reading device (48) arranged downstream from the forming device (26) in the direction of discharge (36) from the filling tube, a second reading device (28) arranged upstream from the forming device (26) relative to the direction of discharge (36) from the filling tube, for reading print marks applied to the film strip (12), and a writing device arranged upstream from the second reading device (28) relative to the direction in which the film strip (12) is drawn, for applying print marks to the film strip (12), **characterised in that** the writing device (27) is arranged at a deflection roller (14, 16, 18, 20, 22, 24) and is able to apply print marks to the film strip (12), the electromagnetic range of said print marks being beyond the visible light spectrum, that the first and the second reading devices (48, 28) are able to detect said print marks in order to control the amount stored in the supply of tubular film (46), and that a centred print image of the product- and/or producer-specific marks can be generated without careful control of the position of the print marks being necessary.

2. The apparatus according to claim 1,
**characterised in that** the electromagnetic range of the print marks is in a wavelength region comprising wavelengths shorter than 380 nm and wavelengths longer than 780 nm.

3. The apparatus according to claim 2,
**characterised in that** the electromagnetic range of the print marks is in a wavelength region comprising wavelengths shorter than 350 nm and wavelengths longer than 800 nm.

4. The apparatus according to claims 1 to 3,
**characterised in that** any desired print image of the product- or producer-specific marks can be generated.

5. The apparatus according to any one of claims 1 to 4,
**characterised in that** the print marks are arranged in the region of product- or producer-specific marks already provided on the film strip (12).

## Revendications

1. Procédé de production de gaine (30) en feuille pouvant être remplie de produit de remplissage liquide, visqueux ou granulaire, à partir d'une bande (12) en feuille contenant un tube (32) de remplissage pouvant être raccordé à une machine de remplissage pour le produit de remplissage, un dispositif (26) de déformation qui entoure le tube (32) de remplissage et qui est destiné à déformer la bande (12) en feuille retirée d'une bobine (10) de réserve sur plusieurs rouleaux (14, 16, 18, 20, 22, 24) de renvoi en une gaine (30) en feuille, qui peut être emmagasinée intermédiairement en une réserve (46) de gaine en feuille, un dispositif (34) de scellement disposé, dans le sens (36) d'expulsion, derrière le dispositif (26) de déformation et destiné à sceller des bords longitudinaux, voisins après la déformation, de la bande (12) en feuille pour former une gaine (30) en feuille, un entraînement (40) d'avance de la gaine (30) en feuille, un premier dispositif (48) de lecture, disposé, dans le sens (36) d'expulsion, après le dispositif (26) de déformation, un deuxième dispositif (28) de lecture disposé, dans le sens (36) d'expulsion, avant le dispositif (26) de déformation et destiné à lire des marquages imprimés apposés sur la bande (12) en feuille et un dispositif d'écriture, disposé, dans la direction de retrait de la bande (12) en feuille, avant le deuxième dispositif (28) de lecture et destiné à apposer des marquages imprimés sur la bande (12) en feuille,
**caractérisé en ce que** le dispositif (27) d'écriture est disposé sur un rouleau (14, 16, 18, 20, 22, 24) de renvoi et est en mesure d'apposer sur la bande (12) en feuille des marquages imprimés, dont le spectre électromagnétique est en dehors de la lumière visible, **en ce que** le premier ainsi que le deuxième dispositif (48, 28) de lecture sont en mesure de détecter ces marquages imprimés pour commander la quantité de la réserve de gaine en feuille et **en ce qu'**une image imprimée médiane de la caractérisation spécifique au produit et/ou au fabricant peut être produite sans avoir à prendre garde à la position des marquages imprimés.

2. Dispositif suivant la revendication 1,
**caractérisé en ce que** le spectre électromagnétique des marquages d'impression est dans une plage de longueur d'onde plus petite que 380 nm et plus grande que 780 nm.

3. Dispositif suivant la revendication 1,
**caractérisé en ce que** le spectre électromagnétique des marquages d'impression est dans une plage de longueur d'onde plus petite que 350 nm et plus grande que 800 nm.

4. Dispositif suivant l'une des revendications 1 à 3,
**caractérisé en ce que** n'importe quelle image imprimée souhaitée de la caractérisation spécifique au produit et/ou au fabricant peut être produite.

5. Dispositif suivant l'une des revendications 1 à 4,
**caractérisé en ce que** les marquages imprimés sont disposés dans la zone de caractérisation spécifique au produit ou au fabricant se trouvant déjà sur la bande (12) en feuille.
